# EUROPÄISCHE PATENTSCHRIFT

(11) **EP 4 423 547 B1**
(45) Veröffentlichungstag und Bekanntmachung des Hinweises auf die Patenterteilung: **23.09.2026**
(21) Anmeldenummer: 22801161.5
(22) Anmeldetag: 14.10.2022
(51) Int. Cl.: G02B 5/04, F41G 7/22, G02B 13/00, G02B 17/04, G02B 17/08, G02B 26/02, G02F 1/35

(54) **OPTISCHE VORRICHTUNG ZUR ERFASSUNG EINER OBJEKTSZENE**
OPTICAL DEVICE FOR DETECTING AN OBJECT SCENE
DISPOSITIF OPTIQUE POUR DÉTECTER UNE SCÈNE D'OBJET

(30) Priorität: 30.10.2021 DE 102021005406
(43) Veröffentlichungstag der Anmeldung: 04.09.2024
(73) Patentinhaber: Diehl Defence GmbH & Co. KG, 88662 Überlingen (DE)
(72) Erfinder: THOLL, Hans Dieter, 88682 Salem (DE); MUNDINGER, Rebekka, 88662 Überlingen (DE)
(74) Vertreter: Diehl Patentabteilung
(86) Internationale Anmeldenummer: PCT/EP2022/078654
(87) Internationale Veröffentlichungsnummer: WO 2023/072629

(56) Entgegenhaltungen:
- EP-A1- 0 051 969
- EP-A1- 0 882 941
- EP-A1- 2 466 247
- US-A1- 2003 206 338

## Beschreibung

Die Erfindung betrifft eine optische Vorrichtung zur Erfassung einer Objektszene mit einem abbildenden optischen System, umfassend eine zur Sammlung einfallender elektromagnetischer Strahlung ausgebildete Eintrittsoptik und eine zur Umlenkung der elektromagnetischen Strahlung von der Eintrittsoptik zu wenigstens einer Detektoreinheit ausgebildete Umlenkoptik, wobei die Umlenkoptik und/oder die Eintrittsoptik um eine Längsachse der optischen Vorrichtung drehbar gelagert ist und die Eintrittsoptik relativ zu der Umlenkoptik um eine zur Längsachse im Wesentlichen orthogonal ausgerichtete Nickachse schwenkbar gelagert ist.

Optische Vorrichtungen, mittels denen eine Objektszene, beispielsweise ein Objekt vor einem Hintergrund, erfasst werden kann, sind grundsätzlich aus dem Stand der Technik bekannt. Hierbei wird ein abbildendes optisches System verwendet, das das Objekt bzw. von dem Objekt ausgehende elektromagnetische Strahlung auf eine Detektoreinheit abbildet, sodass die Detektoreinheit ein entsprechendes Detektorsignal bzw. Detektionssignal erzeugen kann. Dazu weist das abbildende optische System eine Eintrittsoptik auf, die einfallende elektromagnetische Strahlung, insbesondere von dem Objekt emittierte elektromagnetische Strahlung, sammeln kann, wobei die elektromagnetische Strahlung anschließend mittels einer Umlenkoptik innerhalb des Strahlengangs der optischen Vorrichtung umgelenkt werden kann.

Die Umlenkoptik und/oder die Eintrittsoptik bzw. jeweils Bestandteile derselben, können um eine Längsachse der optischen Vorrichtung drehbar gelagert sein, wobei die Eintrittsoptik zusätzlich zu der Umlenkoptik um eine zur Längsachse im Wesentlichen orthogonal ausgerichtete Nickachse schwenkbar gelagert sein kann. Mit anderen Worten kann die Eintrittsoptik um die Nickachse geschwenkt werden, wobei die Eintrittsoptik und/oder die Umlenkoptik zusätzlich um die Längsachse, beispielsweise eine optische Achse der Eintrittsoptik, verdreht werden können. Dadurch ist es insbesondere möglich, einen weiten Bereich, insbesondere einer Halbkugel, bezogen auf die Längsachse der optischen Vorrichtung, mit der Eintrittsoptik, insbesondere einer Mittelachse der Eintrittsoptik, abzustreichen, sodass der Erfassungsbereich der optischen Vorrichtung entsprechend groß realisiert werden kann.

Aus dem Stand der Technik ist ferner bekannt, dass besagte optische Vorrichtungen möglichst kompakt ausgeführt werden sollten, um in einer übergeordneten Vorrichtung, die die optische Vorrichtung umfasst, möglichst wenig Bauraum zu beanspruchen. Ferner ist die Abbildungsqualität der optischen Vorrichtung, beispielsweise des abbildenden optischen Systems, für verschiedene Anwendungszwecke relevant, sodass üblicherweise ein Kompromiss aus Kompaktheit und Abbildungsqualität eingegangen werden muss.

Aus der EP 2 466 247 A1 ist ein optisches System für einen Suchkopf eines Lenkflugkörpers bekannt, das in Form einer Cassegrain-Optik ausgeführt ist. Einer Eingangsoptik ist ein optisches Gelenk gefolgt von einer Detektoroptik nachgeordnet. In EP 0 051 969 A1 wird die Verwendung von Mangin-Spiegeln in einer Cassegrain-Optik zur Beeinflussung von Bildfeldwölbung und Korrektur der sphärischen Aberration vorgeschlagen. Die EP 0 882 941 A1 offenbart eine Einrichtung zur Abwehr von Störungen, welche durch hochintensive Strahlung auf einem Detektor eines Suchkopfes hervorgerufen werden können. Dabei wird ein zwei Prismen umfassendes Konstrukt verwendet, welches über einen Piezosteller in zwei Stellungen bringbar ist, wobei in der einen Stellung die einfallende Strahlung das Konstrukt passiert und in der anderen Stellung eine Totalreflexion an einem Prisma erfolgt.

Der Erfindung liegt die Aufgabe zugrunde eine demgegenüber verbesserte optische Vorrichtung anzugeben.

Die Aufgabe wird durch eine optische Vorrichtung mit den Merkmalen des Anspruchs 1 gelöst. Vorteilhafte Ausgestaltungen sind Gegenstand der Unteransprüche.

Wie beschrieben, betrifft die Erfindung eine optische Vorrichtung zur Erfassung einer Objektszene, die eine Eintrittsoptik zum Sammeln einfallender elektromagnetischer Strahlung aufweist. Die Erfindung beruht auf der Erkenntnis, dass die optische Vorrichtung dazu ausgebildet ist, zwischen zwei optischen Elementen der Umlenkoptik ein Zwischenbild zu erzeugen, welches Zwischenbild mittels einer Abbildungsoptik auf die wenigstens eine Detektoreinheit abbildbar ist, wobei die Eintrittsoptik dazu ausgebildet ist, den Strahlengang der Eintrittsoptik mittels wenigstens eines refraktiven optischen Elements zu fokussieren und/oder zu falten.

Vorteilhafterweise ist es somit möglich, den Strahlengang innerhalb der optischen Vorrichtung, insbesondere innerhalb der Eintrittsoptik zu falten, sodass die optische Vorrichtung als Ganzes kompakter ausgeführt werden kann. Als refraktives optisches Element kann eine Linse oder ein Mangin-Spiegel verwendet werden. Mit anderen Worten kann das refraktive optische Element als Linse oder als Mangin-Spiegel ausgebildet sein oder kann eine solche bzw. einen solchen umfassen.

Zur Faltung des Strahlengangs innerhalb der Eintrittsoptik kann als refraktives optisches Element ein Mangin-Spiegel verwendet. Die Verwendung des Mangin-Spiegels erlaubt hierbei zum einen das Falten des Strahlengangs und zum anderen die Erzeugung des beschriebenen Zwischenbilds des Objekts in einer definierten optischen Qualität. Durch die Verwendung des Mangin-Spiegels kann insbesondere die Punktbildqualität in der Ebene des Zwischenbilds verbessert werden. Strahlungsquellen, mit denen die optische Vorrichtung in ihrem Betrieb konfrontiert werden könnte, beispielsweise punktförmige Lichtquellen, insbesondere Laserstrahlung, können somit mit einer vergleichsweise geringen Punktbildgröße in der Ebene des Zwischenbild abgebildet werden. Dadurch kann der Umgang mit derartigen Strahlungsquellen verbessert werden, da die hohe Punktbildqualität in der beschriebenen Zwischenebene des Zwischenbilds mehrere Möglichkeiten erlaubt, eine solche, gegebenenfalls punktförmige, Strahlungsquelle nötigenfalls zu filtern bzw. in ihrer Strahlungsleistung abzuschwächen, um eine Auswertung mittels der Detektoreinheit zu verbessern oder zu ermöglichen.

Hierbei ist es insbesondere möglich, dass eine für das Erfassen des eigentlichen Objekts, das heißt desjenigen Objekts, das erfasst werden soll, unnötige oder störende weitere Strahlungsquelle in der Auswertung der Detektoreinheit ausgeblendet bzw. derart abgeschwächt werden kann, dass diese das Erfassen des gewünschten Objekts nicht oder nicht übermäßig beeinträchtigt. Der detaillierte Aufbau der optischen Vorrichtung kann grundsätzlich beliebig gewählt werden, d.h., die einzelnen verwendeten optischen Elemente können zu dem beschriebenen Zweck ausgebildet sein, jedoch beliebig ausgewählt bzw. kombiniert werden. Zum Beispiel kann elektromagnetische Strahlung zunächst durch einen transparenten Dom auf einen Sammelspiegel fallen, der die elektromagnetische Strahlung zu dem beschriebenen Mangin-Spiegel führt.

Von dem Mangin-Spiegel aus, kann die Strahlung zu der Umlenkoptik geführt werden, die das Strahlenbündel, insbesondere durch Prismen, umleitet. Hierbei wird das Objekt mittels des Mangin-Spiegels in einer Zwischenebene bzw. einer Ebene des Zwischenbilds, abgebildet, wobei ein abbildendes System bzw. eine Abbildungsoptik vorgesehen ist, die das Zwischenbild auf den Detektor bzw. die Detektoreinheit abbildet. Die Abbildungsoptik kann daher auch als Detektoroptik bezeichnet werden. Durch die Verwendung des Mangin-Spiegels, beispielsweise anstelle eines regulären Spiegels, kann die Abbildungsoptik vereinfacht werden. Insbesondere kann die Abbildungsoptik derart ausgelegt werden, dass diese nur die Aberrationen der Abbildungsoptik kompensiert. Da das Zwischenbild durch Verwenden des Mangin-Spiegels in verbesserter optischer Qualität erzeugt wurde, kann die Abbildungsoptik das Zwischenbild in ebenso verbesserter optischer Qualität auf den Detektor abbilden.

Die optische Vorrichtung weist eine optische Schutzeinrichtung auf, die dazu ausgebildet ist, die optische Vorrichtung, insbesondere die Detektoreinheit, vor elektromagnetischer Strahlung, insbesondere oberhalb eines definierten Strahlungsflusses, zu schützen. Bekanntermaßen existieren verschiedene Arten bzw. Klassen von Strahlungsquellen, die bei der Erfassung von Objekten mittels einer optischen Vorrichtung relevant sein können. Grundsätzlich hat die optische Schutzeinrichtung die Aufgabe, die optische Vorrichtung vor derartiger elektromagnetischer Strahlung zu schützen. Insbesondere wird seitens der optischen Schutzeinrichtung verhindert, dass die unbeabsichtigt bzw. störend in die optische Vorrichtung eintretende elektromagnetische Strahlung ungehindert auf die Detektoreinheit fällt, um die Detektoreinheit zu überstrahlen bzw. die Detektoreinheit im schlimmsten Fall zu zerstören. Zweckmäßig ist die Schutzeinrichtung somit dazu ausgebildet, elektromagnetische Strahlung oberhalb eines definierten Strahlungsflusses, also in Abhängigkeit von der Bestrahlungsstärke der Strahlungsquelle, zu schützen. Die in der Objektszene befindlichen Störer, beispielsweise natürliche Störer, Blender, Hochleistungsstrahlung und dergleichen, können somit in Abhängigkeit von ihrem Strahlungsfluss identifiziert werden und die optische Vorrichtung, insbesondere deren Detektoreinheit, vor Einwirkungen der Strahlung dieser Störquellen geschützt werden.

Wie beschrieben, wird durch die Verwendung des Mangin-Spiegels als refraktives optisches Element im Strahlengang der optischen Vorrichtung erreicht, dass die Punktbildqualität, insbesondere des Zwischenbilds, verbessert wird. Da Störer im Bereich des Objekts in der zu erfassenden Objektszene üblicherweise schärfer begrenzt bzw. weniger flächig, insbesondere punktförmig, ausgeführt sein oder abstrahlen können, kann durch die verbesserte Punktbildqualität im Zwischenbild eine Auswahl bzw. Abgrenzung der Störer gegenüber den Objekten von Interesse vorgenommen werden. Mit anderen Worten können die Störer gezielt aufgrund ihrer Strahlungsflüsse, die in Bezug auf ihre Ausdehnung höher liegen, als die der Objekte, die mittels der optischen Vorrichtung erfasst werden sollen, von den Objekten abgegrenzt und die Strahlführung der Strahlung zu der Detektoreinheit entsprechend angepasst werden. Somit kann verhindert werden, dass die Strahlung der Störer ungehindert zu der Detektoreinheit gelangen kann, um diese zu überstrahlen oder zu zerstören.

Die optische Schutzeinrichtung kann beispielsweise dazu ausgebildet sein, die optische Vorrichtung vor sogenannter Inband-Strahlung, insbesondere Hochleistungsstrahlung, zu schützen, wobei die optische Vorrichtung wenigstens eine erste optische Schutzeinheit aufweist, die dazu ausgebildet ist, elektromagnetische Strahlung oberhalb eines definierten Grenzstrahlungsflusses, insbesondere oberhalb einer definierten Bestrahlungsstärke, zu filtern. Die erste optische Schutzeinheit ermöglicht somit, Hochleistungsstrahlung, beispielsweise Laserstrahlung, zu filtern, sodass effektiv verhindert werden kann, dass die Detektoreinheit zerstört oder die Auswertung der Objektszene durch die Detektoreinheit beeinträchtigt werden kann.

Hierzu ist die erste optische Schutzeinheit dazu ausgebildet, elektromagnetische Strahlung oberhalb eines definierten Grenzstrahlungsflusses, beispielsweise oberhalb einer definierten Bestrahlungsstärke, zu filtern. Die erste optische Schutzeinheit kann beispielsweise ein nicht-lineares optisches Element aufweisen, das elektromagnetische Strahlung basierend auf dem Strahlungsfluss bzw. der Bestrahlungsstärke filtert. Mit anderen Worten werden höhere Strahlungsflüsse bzw. höhere Bestrahlungsstärken stärker gefiltert als vergleichsweise niedrigere Strahlungsflüsse bzw. Bestrahlungsstärken. Die Objekte, die mittels der optischen Vorrichtung erfasst werden sollen, können beispielsweise wenig oder nicht gefiltert erfasst werden, wohingegen höher energetische Strahlung bzw. höhere Strahlungsflüsse und Bestrahlungsstärken, beispielsweise verursacht durch Störer, gefiltert werden können, sodass die Detektoreinheit nicht überstrahlt und nicht zerstört wird.

Die optische Vorrichtung ist somit auch durch die erste optische Schutzeinheit transparent, wenn die Intensität bzw. der Strahlungsfluss der Strahlung vergleichsweise niedrig ist, insbesondere unterhalb eines definierten Grenzstrahlungsflusses bzw. einer definierten Bestrahlungsstärke. Die Detektoreinheit wird dagegen geschützt, wenn die Intensität bzw. der Strahlungsfluss der Strahlung vergleichsweise hoch ist, insbesondere oberhalb eines definierten Grenzstrahlungsflusses bzw. einer definierten Bestrahlungsstärke. Die Bestrahlungsstärke kann insbesondere in W/cm² angegeben werden, wobei die Strahlung, wie beschrieben, in Abhängigkeit von der definierten Schwelle gefiltert wird. Hierbei kann die erste optische Schutzeinheit einen kontinuierlichen Übergang oder einen diskreten Übergang vorsehen. Beispielsweise kann die nicht-lineare Filterung der Strahlung basierend auf einer Zwei-Photonen-Absorption durchgeführt werden. Das beschriebene Filterelement, insbesondere das nicht-lineare optische Element kann beispielsweise zwischen zwei optischen Elementen angeordnet werden. Insbesondere kann das nicht-lineare optische Element in der Ebene des Zwischenbilds oder im Bereich der Ebene des Zwischenbilds angeordnet sein. Alternativ kann das nicht-lineare optische Element auch im Bereich der Bildebene angeordnet sein.

Nach einer weiteren Ausgestaltung der optischen Vorrichtung kann vorgesehen sein, dass die Schutzeinrichtung dazu ausgebildet ist, die optische Vorrichtung vor sogenannter "Out-of-Band-Strahlung" zu schützen, wobei die Schutzeinrichtung eine zweite optische Schutzeinheit aufweist, die dazu ausgebildet ist, elektromagnetische Strahlung materialbedingt zu absorbieren, insbesondere Strahlung unterhalb einer Wellenlänge von 1,1µm, und/oder die zweite optische Schutzeinheit wenigstens eine Mikrostruktur auf wenigstens einem optischen Element der optischen Vorrichtung, insbesondere einem optischen Prisma der optischen Umlenkeinrichtung, aufweist.

Demnach kann die zweite optische Schutzeinheit störende Strahlung in einem bestimmten Wellenlängenbereich, insbesondere unterhalb einer Wellenlänge von 1,1µm, im Speziellen 1064nm, filtern. Die zweite optische Schutzeinheit kann die Filterung beispielsweise materialbedingt vornehmen, indem die beschriebene elektromagnetische Strahlung zumindest teilweise absorbiert wird. Ebenso ist es möglich, dass die zweite optische Schutzeinheit eine Mikrostruktur aufweist oder eine solche bereitstellt, die die störende elektromagnetische Strahlung aus dem Strahlengang entfernt. Die Mikrostruktur kann beispielsweise Bestandteil eines optischen Elements sein, beispielsweise kann eine Oberfläche eines optischen Prismas mit der Mikrostruktur versehen sein. Die materialbedingte Absorption kann insbesondere durch ein geeignetes Material bereitgestellt werden, beispielsweise basierend auf Silizium. Die Mikrostruktur kann ebenfalls durch jede geeignete Form aufgebracht werden. Zum Beispiel kann die Oberfläche des optischen Elements, das die Mikrostruktur aufweist, diffraktiv wirken.

Die Schutzeinrichtung ist ferner dazu ausgebildet ist, den Reflexionsgrad einer optischen Fläche der optischen Vorrichtung, nämlich eines optischen Prismas der Umlenkeinrichtung, einzustellen. Wie beschrieben, können Störer im Bereich der Objektszene elektromagnetische Strahlung abgeben, die ein Erfassen des Objekts durch die Detektoreinheit zumindest beeinträchtigen kann. Durch das Einstellen des Reflexionsgrads der optischen Fläche, kann die an der optischen Fläche reflektierte elektromagnetische Strahlung beeinflusst werden.

Beispielsweise kann, falls sich ein Störer im Bereich des Objekts befindet bzw. von einem Störer elektromagnetische Strahlung abgegeben und in die optische Vorrichtung eingebracht wird, der Reflexionsgrad reduziert werden, sodass die optische Vorrichtung geschützt werden kann. Beispielsweise kann dadurch verhindert werden, dass Hochleistungsstrahlung zur Detektoreinheit gelangt, um diese zu beschädigen oder zu zerstören. Befindet sich kein Störer in der Objektszene, kann der Reflexionsgrad entsprechend erhöht werden, um die Empfindlichkeit für das Erfassen des relevanten Objekts möglichst zu erhöhen. Mit anderen Worten kann der Reflexionsgrad der optischen Fläche, beispielsweise einer totalreflektierenden Fläche innerhalb der Umlenkeinrichtung, insbesondere innerhalb eines optischen Prismas, verändert werden, um zumindest einen Teil der Strahlung aus dem optischen Element auszukoppeln bzw. nicht mit der optischen Fläche zu reflektieren, sodass diese den restlichen Strahlengang nicht erreichen kann, sondern an der optischen Fläche ausgekoppelt wird.

Die Schutzeinrichtung kann ferner dazu ausgebildet sein, den Reflexionsgrad in Abhängigkeit von einem gesteuerten Triggersignal, insbesondere einem Zeitsignal, oder einem geregelten Triggersignal einzustellen. Beispielsweise kann der Reflexionsgrad in Abhängigkeit von einem Detektionssignal der Detektoreinheit, oder in Abhängigkeit von der Temperatur wenigstens eines Elements, insbesondere das die optische Fläche aufweisenden optischen Elements, eingestellt werden. Ebenso ist es möglich, als Triggersignal ein Zeitsignal zu verwenden. Ergibt das Detektionssignal beispielsweise ein Überstrahlen der Detektoreinheit, insbesondere aufgrund von von einem Störer abgegebener elektromagnetischer Hochleistungsstrahlung, kann der Reflexionsgrad der optischen Fläche durch die Schutzeinrichtung, wie zuvor beschrieben, eingestellt werden. Dadurch kann ein Abblendmechanismus realisiert werden, sodass die Detektoreinheit nicht überstrahlt, beschädigt oder zerstört werden kann. Der Reflexionsgrad der optischen Fläche kann insbesondere genau derart eingestellt werden, dass die Detektoreinheit die Objektszene erfassen, insbesondere das in der Objektszene relevante Objekt erfassen kann.

Ebenso ist es möglich, eine temperaturabhängige Einstellung des Reflexionsgrads vorzunehmen. Hierzu kann die Temperatur wenigstens eines Elements innerhalb der optischen Vorrichtung erfasst werden. Eine Temperaturänderung ergibt sich dabei insbesondere durch die Einstrahlung elektromagnetischer Strahlung in die optische Vorrichtung. Beispielsweise kann sich das wenigstens eine Element durch die eingebrachte elektromagnetische Strahlung erwärmen und somit temperaturabhängig der Reflexionsgrad der optischen Fläche eingestellt werden. Trifft beispielsweise von einem Störer ausgesandte Hochleistungsstrahlung auf das Element, wird sich das Element entsprechend erwärmen, sodass in Abhängigkeit von der Erwärmung des Elements der Reflexionsgrad der optischen Fläche eingestellt werden kann. Die Temperatur kann hierbei aktiv gemessen werden, beispielsweise durch einen Temperatursensor, sodass basierend auf der erfassten Temperatur ein Einstellen des Reflexionsgrads erfolgen kann. Alternativ ist es ebenso möglich, die Anpassung des Reflexionsgrads passiv vorzunehmen, d.h., dass die Temperaturänderung gleichzeitig eine Änderung des Reflexionsgrads bewirkt, zum Beispiel durch eine materialbedingte Temperaturabhängigkeit des Reflexionsgrads.

Die Schutzreinrichtung ist dazu ausgebildet, den Reflexionsgrad einzustellen, indem ein weiteres optisches Element an die optische Fläche, deren Reflexionsgrad eingestellt werden soll, verbracht bzw. positioniert wird. Dadurch kann die Totalreflexion an der optischen Fläche frustriert werden, sodass Blender bzw. Störer in der Objektszene abgeschwächt werden können. Beispielsweise kann ein Zusatzprisma im Bereich eines Prismas, das die beschriebene optische Fläche aufweist, angeordnet werden. Wird der Abstand zwischen dem Zusatzprisma und dem Prisma, also der optischen Fläche, deren Reflexionsgrad eingestellt werden soll, und einer Fläche des Zusatzprismas, geeignet gewählt, wird die Totalreflexion an der optischen Fläche beeinträchtigt bzw. reduziert, sodass zumindest ein Teil der durch die optische Vorrichtung geführten elektromagnetischen Strahlung ausgekoppelt werden kann und somit nicht zur Detektoreinheit geführt wird.

Die Schutzeinrichtung ist dazu ausgebildet, den Reflexionsgrad durch Einstellen eines Abstands eines bewegbaren optischen Elements zu der optischen Fläche einzustellen. Wie zuvor beschrieben, kann der Reflexionsgrad der optischen Fläche durch den Abstand des zusätzlichen optischen Elements, relativ zu der optischen Fläche eingestellt werden. Durch das Bewegen des bewegbaren optischen Elements nahe an die optische Fläche kann die Totalreflexion an der optischen Fläche frustriert werden. Die optische Fläche ist Bestandteil eines Prismas innerhalb der Umlenkoptik, wobei die elektromagnetische Strahlung innerhalb der Umlenkoptik an der optischen Fläche totalreflektiert werden kann. Soll mittels der Schutzeinrichtung die Detektoreinheit geschützt werden, kann das bewegbare optische Element näher an die optische Fläche heran bewegt werden. Das optische Element kann beispielsweise ebenfalls als Prisma ausgeführt sein und an das Prisma der Umlenkoptik bewegt werden. Dadurch kann ein Abstand bzw. ein Spalt zwischen dem bewegbaren optischen Element und dem die optische Fläche aufweisenden optischen Element eingestellt werden, sodass letztlich die Totalreflexion frustriert und der Reflexionsgrad eingestellt werden kann.

Beispielsweise kann mittels der Detektoreinheit ein Detektionssignal erzeugt werden, das im Falle von elektromagnetischer Strahlung, die von einem Störer bzw. Blender in die optische Vorrichtung eingebracht wird, ein entsprechendes Blendsignal erzeugen kann. Anschließend kann der Spalt bzw. der Abstand durch Bewegen des bewegbaren optischen Elements angepasst werden, um den Störer bzw. Blender derart abzuschwächen, dass die Detektoreinheit nicht überstrahlt und nicht beschädigt wird. Insbesondere kann somit ein radiometrisches Trennen an der optischen Fläche erfolgen, sodass ein steuerbarer Abblendmechanismus realisiert werden kann bzw. ein gesteuertes Abblenden erfolgen kann. Hierzu kann die Detektoreinheit insbesondere aus der Sättigung in einen normalen Betriebsbereich verbracht werden, in dem die Totalreflexion entsprechend abgeschwächt wird, und so der Reflexionsgrad derart angepasst wird, dass eine Erfassung des Objekts mittels der Detektoreinheit möglich ist, und Störstrahlung bzw. Blendstrahlung den Detektor bzw. die Detektoreinheit nicht überstrahlen kann.

Die Schutzeinrichtung kann ferner dazu ausgebildet sein, den Reflexionsgrad materialbedingt, insbesondere durch temperaturbedingte Veränderung eines Abstands zwischen der optischen Fläche und einem weiteren optischen Element, einzustellen. Wie bereits beschrieben, kann ein Material verwendet werden, das in Abhängigkeit von der Temperatur, die durch die Einstrahlung erzeugt wird, einen Parameter verändert. Insbesondere kann somit der Abstand zwischen der optischen Fläche und dem weiteren optischen Element eingestellt werden. Beispielsweise kann bei zunehmender Temperatur ein Zusammenziehen oder ein Ausdehnen des wenigstens einen weiteren optischen Elements und/oder des die optische Fläche aufweisenden Elements erfolgen, sodass der Abstand entsprechend eingestellt wird. Ebenso ist es möglich, eine Beschichtung an der optischen Fläche zu verwenden, die temperaturabhängig ihre Eigenschaften verändert und so beispielsweise den Reflexionsgrad materialbedingt ändert.

Die optische Vorrichtung kann ferner wenigstens eine Blendeneinrichtung aufweisen, insbesondere eine Irisblende und/oder ein thermochromes Element, welche Blendeneinrichtung dazu ausgebildet ist, einen Strahlungsfluss auf die Detektoreinheit, insbesondere im Bereich einer Austrittspupille, zu begrenzen. Beispielsweise kann die optische Vorrichtung somit eine Blende bzw. Blendeneinrichtung, insbesondere eine Irisblende, in der Sekundäroptik bzw. in der Abbildungsoptik aufweisen. Die Blendeneinrichtung ist bevorzugt in der Nähe der Austrittspupille angeordnet. Die Blendeneinrichtung kann den Strahlungsfluss auf die Detektoreinheit begrenzen. Beispielsweise kann eine Irisblende teilweise geöffnet oder teilweise geschlossen werden, insbesondere der Öffnungsgrad angepasst werden, um die Strahlung durch die optische Vorrichtung, insbesondere auf die Detektoreinheit, zu begrenzen. Die Steuerung der Blendeneinrichtung kann in Abhängigkeit eines Detektorsignals erfolgen. Ferner können als Blendeneinrichtung auch thermochrome Elemente, insbesondere Thermochrommaterialien, verwendet werden.

Daneben betrifft die Erfindung einen Suchkopf, insbesondere für ein Lenkflugkörpersystem, der eine zuvor beschriebene optische Vorrichtung aufweist. Sämtliche Vorteile, Einzelheiten und Merkmale, die in Bezug auf die optische Vorrichtung beschrieben wurden, sind auf den Suchkopf übertragbar.

Die Erfindung wird nachfolgend anhand von Ausführungsbeispielen unter Bezugnahme auf die Fig. erläutert. Die Fig. sind schematische Darstellungen und zeigen:
- Fig. 1: einen Suchkopf für ein Lenkflugkörpersystem mit einer optischen Vorrichtung;
- Fig. 2: eine optische Vorrichtung für ein Lenkflugkörpersystem von Fig. 1 nach einem ersten Ausführungsbeispiel;
- Fig. 3: eine optische Vorrichtung für ein Lenkflugkörpersystem von Fig. 1 nach einem zweiten Ausführungsbeispiel;
- Fig. 4: eine optische Vorrichtung für ein Lenkflugkörpersystem von Fig. 1 nach einem dritten Ausführungsbeispiel; und
- Fig. 5: eine optische Vorrichtung für ein Lenkflugkörpersystem von Fig. 1 nach einem vierten Ausführungsbeispiel.

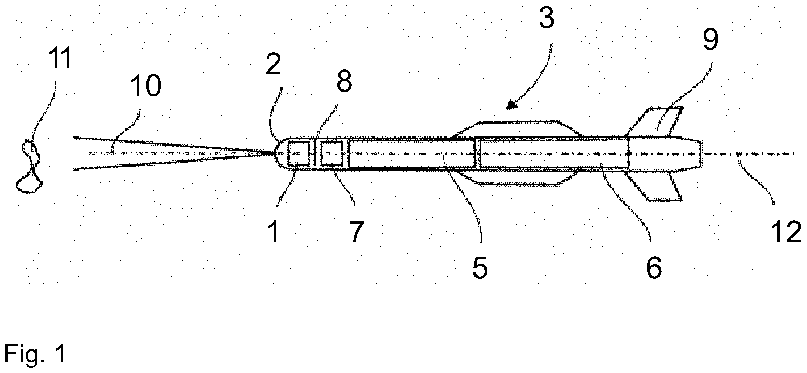

Fig. 1 zeigt eine beispielhafte Verwendung einer hierin beschriebenen optischen Vorrichtung 1 in einem Suchkopf 2 für ein Lenkflugkörpersystem 3. Das Lenkflugkörpersystem 3 weist den Suchkopf 2, einen Wirkteil 5 und ein Raketentriebwerk 6 auf. Der Suchkopf 2 ist mit der optischen Vorrichtung 1 und einem Lenkteil 7 ausgestattet, der dazu ausgebildet ist, aus optischen Informationen aus der optischen Vorrichtung 1, insbesondere einer Detektoreinheit 8, Lenksignale zum Lenken des Lenkflugkörpers 2 zu erzeugen. Unter Verwendung der Lenksignale werden Lenkflügel 9 verstellt, sodass das Lenkflugkörpersystem 3 bei seinem Flug durch die Luft gelenkt wird.

Die optische Vorrichtung 1 hat ein Sehfeld 10, wobei in dem Sehfeld 10 befindliche Objekte einer Objektszene 11 von der optischen Vorrichtung 1 auf die Detektoreinheit 8 abgebildet werden, sodass eine Bildverarbeitung des Lenkteils 7 ein abgebildetes Objekt erkennen und klassifizieren kann. Die Lage des Objekts relativ zur Längsachse 12 des Lenkflugkörpersystems 7 wird zum Erzeugen der Steuersignale zum Anflug auf ein erkanntes Objekt verwendet.

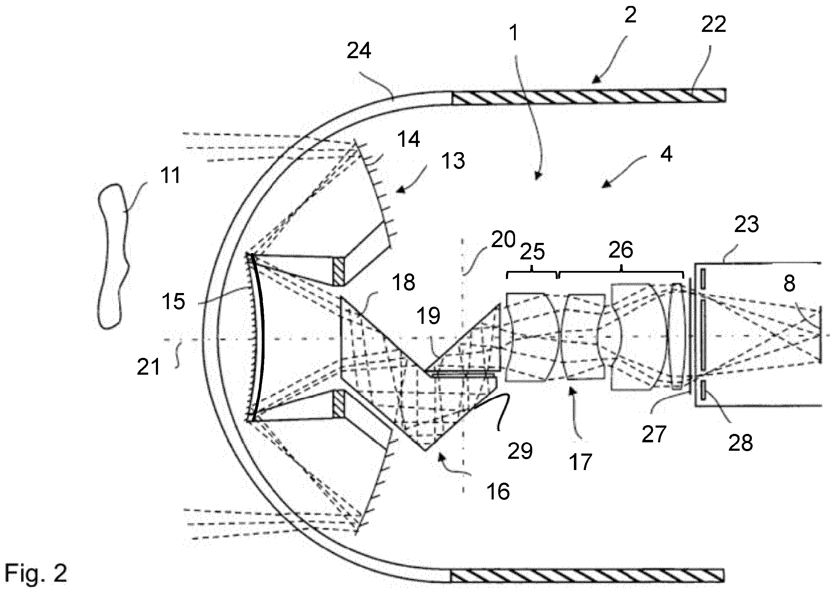

Fig. 2 zeigt den vorderen Teil des Suchkopfs 2 des Lenkflugkörpersystems 3 aus Fig. 1 in einer detaillierteren Darstellung. Die optische Vorrichtung 1 ist als Cassegrain-Optik ausgeführt und umfasst eine Eintrittsoptik 13 mit einem konkaven Primärspiegel 14 und einem konvexen refraktiven Element 15, das als Mangin-Spiegel ausgebildet ist. Über eine Umlenkoptik 16, die auch als optisches Gelenk bezeichnet werden kann, ist die Eintrittsoptik 13 optisch mit einer als Detektorobjektiv ausgeführten Detektoroptik 17 verbunden, durch die die Objektszene 11 in Verbindung mit der Eintrittsoptik 13 und der Umlenkoptik 16 auf die Detektoreinheit 8 abgebildet wird. Die Detektoroptik 17 kann somit auch als Abbildungsoptik bzw. abbildendes System bezeichnet werden.

Die Umlenkoptik 16 ist beispielsweise aus zwei Prismenblöcken 18, 19 gebildet, die zueinander beweglich ausgeführt sind. Hierbei ist der erste Prismenblock 18 relativ zu dem zweiten Prismenblock 19 um eine Nickachse 20 schwenkbar und beide Prismenblöcke 18, 19 sind um eine Rollachse 21 rotierbar, die identisch zur Längsachse 12 des Lenkflugkörpersystems 3 liegt. Der erste Prismenblock 18 ist fest mit der Eintrittsoptik 13 verbunden, sodass auch diese um die Nickachse 20 und die Rollachse 21 drehbar ist. Die Detektoroptik 17 ist fest mit dem zweiten Prismenblock 19 verbunden, sodass sie ebenfalls im regulären Betrieb des Suchkopfs 2 um die Rollachse 21 drehbar ist.

Die Detektoreinheit 8 ist starr mit einem Außengehäuse 22 des Suchkopfs 2 verbunden. Ein Kühler 23 dient zum Kühlen der Detektoreinheit 8, die beispielsweise im infraroten Spektralbereich zwischen 2 µm und 5 µm empfindlich ist.

Die Ausrichtung des Sehfelds 10 durch einen Dom 24 hindurch in die Objektszene 11 erfolgt mittels der Cassegrain-Eintrittsoptik 13, deren Bildfeld über die Umlenkoptik 16 und das anschließende Linsensystem der Detektoroptik 17 auf die strukturfeste Detektoreinheit 8 geführt wird. Die Umlenkoptik 16 erlaubt es, die optische Achse der Eintrittsoptik 13 innerhalb eines großen Schwenkwinkelbereichs von beispielsweise ±90° zu positionieren, wobei das Sehfeld 10 der Eintrittsoptik 13 immer auf die Detektoreinheit 8 abgebildet wird. Durch Drehung der Eintrittsoptik 13 und der Umlenkoptik 16 um die Rollachse 21 kann die optische Achse der Eintrittsoptik 13 in eine beliebige Richtung der vorderen Hemisphäre positioniert werden.

Die Detektoroptik 17 ist zum einen dazu ausgebildet, das Zwischenbild auf die Detektorebene der Detektoreinheit 8 abzubilden und zum anderen eine Strahlung sammelnde Fläche in der Primäroptik, beispielsweise der Primärspiegel 14, auf eine Kaltblende 28 abzubilden, um eine hohe Kaltblendeneffektivität zu gewährleisten.

Zur Erfüllung der Abbildungsaufgaben umfasst die Detektoroptik 17 mehrere Linsen, die in einen ersten Teil 25 und einen zweiten Teil 26 unterteilt sind. Der erste Teil 25 wirkt im Wesentlichen als Feldlinse mit der Kaltblende 28 als Bildebene. Der zweite Teil 26 bildet im Wesentlichen das Zwischenbild auf die Detektorebene der Detektoreinheit 8 ab. Ein in der Kaltblende 28 oder dessen näherer Umgebung befindliches Kaltfilter legt den Spektralbereich der Optik fest. Der Spektralbereich kann zusammenhängend (monospektral) oder in multispektrale Bereiche unterteilt sein. Ferner kann eine Blendeneinrichtung 27 vorgesehen sein, die beispielsweise als Irisblende ausgebildet ist und im Bereich der Austrittspupille angeordnet sein kann. Durch die Blendeneinrichtung 27 kann der Strahlungsfluss auf die Detektoreinheit 8 begrenzt werden.

Wie beschrieben, wird ein refraktives optisches Element 15 verwendet, das als Mangin-Spiegel ausgestaltet ist. Der zentrale Innenbereich der Eintrittsoptik 13 ist somit als rückseitig verspiegelte Linse ausgelegt, die asphärisch geformt sein kann.

In die Eintrittsoptik 13 einfallende elektromagnetische Strahlung wird somit durch den Primärspiegel 14 auf das refraktive optische Element 15, also den Mangin-Spiegel, geführt. Von dort aus wird die elektromagnetische Strahlung der Umlenkoptik 16 zugeführt, wobei sich, insbesondere zwischen den Prismenblöcken 18, 19 ein Zwischenbild ergibt. Das Zwischenbild ist durch die Verwendung des Mangin-Spiegels von guter optischer Qualität. Das bedeutet, dass die Punktbildqualität des Zwischenbilds definierten Anforderungen entspricht. Durch die Detektoroptik 17 wird das Zwischenbild auf die Detektoreinheit 8 abgebildet.

Hierbei ist es insbesondere möglich, dass optische Störer in der Objektszene 11 ausgeblendet bzw. in ihrer Bestrahlungsstärke reduziert werden können. Hierzu kann der Reflexionsgrad der optischen Fläche 29 angepasst werden. Die optische Fläche 29 ist hierbei beliebig ausgewählt. Grundsätzlich kann jedwede optische Fläche in der optischen Vorrichtung 1, beispielsweise in der Eintrittsoptik 13 oder in der Umlenkoptik 16, ausgewählt werden. Die nachfolgende Beschreibung ist analog übertragbar.

In der Umlenkoptik 16 tritt an der optischen Fläche 29 Totalreflexion auf, sodass die elektromagnetische Strahlung, die in die Umlenkoptik 16 eingeleitet wird, an der optischen Fläche 29 totalreflektiert und somit dem Prismenblock 19 zugeführt wird. Wird der Reflexionsgrad der optischen Fläche 29 beeinflusst, kann auch die Strahlung beeinflusst werden, die zu dem Zwischenbild beiträgt. Die optische Vorrichtung 1 kann eine Schutzeinrichtung 4 aufweisen, die dazu ausgebildet ist, die Detektoreinheit 8 vor schädlicher oder störender Strahlung zu schützen.

In der Fig. 2 dargestellten Ausführungsform kann die optische Fläche 29 temperaturbedingt und/oder materialbedingt ihren Reflexionsgrad anpassen. Tritt beispielsweise hochenergetische Strahlung eines Störers, insbesondere eines Lasers, in die Umlenkoptik 16 und somit in den Prismenblock 18 ein, kann der Reflexionsgrad der optischen Fläche 29 entsprechend reduziert werden, sodass die Totalreflexion frustriert wird und Strahlung an der optischen Fläche 29 austreten kann. Die optische Fläche 29 kann beispielsweise eine Mikrostrukturierung aufweisen, die sich temperaturabhängig aufgrund der Erwärmung durch die Strahlung ändert. Ebenso ist es möglich, dass die optische Fläche 29 mit einer Beschichtung versehen ist, die sich temperaturbedingt ändert und somit den Reflexionsgrad der optischen Fläche 29 reduzieren kann.

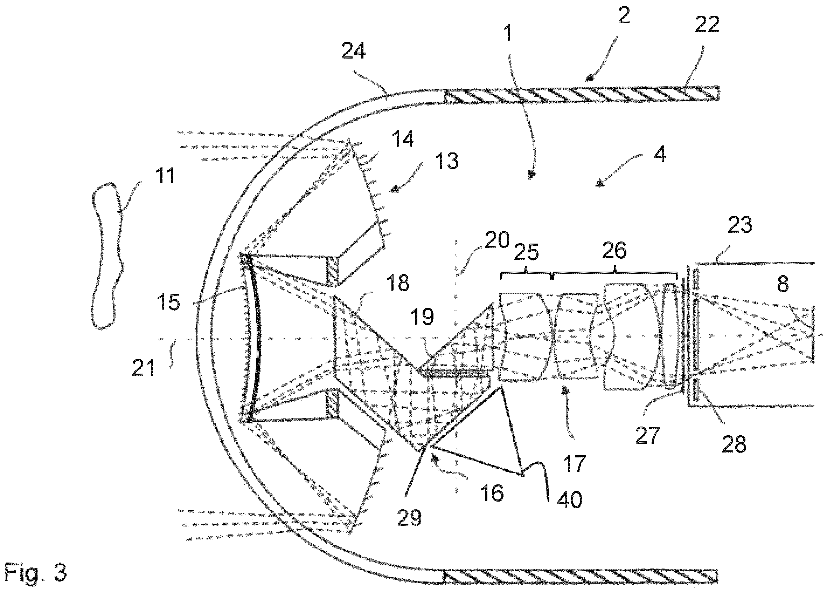

In Fig. 3 ist eine Ausführungsform der Erfindung dargestellt, bei der ein zusätzliches bewegbares optisches Element 30 im Bereich der Umlenkoptik 16 vorgesehen ist. Das optische Element 40 kann als Bestandteil der Schutzeinrichtung 4 verstanden werden. Das zusätzliche bewegbare optische Element 40 zum Beispiel ebenfalls als Prismenblock ausgeführt, wobei das optische Element 40 zumindest abschnittsweise parallel mit der optischen Fläche 29 angeordnet sein kann. Das optische Element 40 ist, wie beschrieben, bewegbar angeordnet, sodass ein Spalt bzw. ein Abstand zwischen der optischen Fläche 29 und der korrespondierenden Fläche des optischen Elements 40 eingestellt werden kann. Zum Beispiel ist dem optischen Element 40 seitens der Schutzeinrichtung 4 ein Aktor zugeordnet, der das optische Element 40 relativ zu dem Prismenblock 18 bewegen bzw. positionieren kann.

Wird das optische Element 40 nahe genug an die optische Fläche 29 bewegt, kann die Totalreflexion an der optischen Fläche 29 frustriert werden. Dadurch kann ein Teil der elektromagnetischen Strahlung, die in die Eintrittsoptik 13 gelangt, ausgekoppelt werden. Beispielsweise kann die Detektoreinheit 8 ein Detektorsignal erzeugen, das, beispielsweise wenn die Detektoreinheit 8 überstrahlt wird, eine Bewegung des optischen Elements 40 näher an den Prismenblock 18 veranlassen kann, um abzublenden und somit die Detektoreinheit 8 aus der Sättigung zu holen.

Hierbei kann ferner eine Begrenzung des Strahlungsflusses vorgenommen werden. Im Vergleich zu den relevanten Objekten in der Objektszene 11, die mittels des Suchkopfs 2 erfasst werden sollen, zeichnen sich Störer bzw. Blender üblicherweise durch eine höhere Bestrahlungsstärke aus. Beispielsweise Laserstrahlung, die einen vergleichsweise hohen Strahlungsfluss auf einer geringen Fläche erzeugt, insbesondere punktförmig im Zwischenbild erscheint, kann daher über einer beliebig definierbaren Grenzbestrahlungsstärke bzw. einem Grenzstrahlungsfluss liegen. Hierzu können alternativ oder zusätzlich zu dem beschriebenen bewegbaren optischen Element 30 Beschichtungen vorgesehen sein, die, insbesondere nicht-linear, entsprechende Anteile elektromagnetischer Strahlung filtern können.

In der beschriebenen optischen Vorrichtung 1 können ferner Beschichtungen oder andere Filterelemente verwendet werden, beispielsweise kann ein Filterelement zwischen den beiden Prismenblöcken 18, 19 angeordnet sein. Das Filterelement kann beispielsweise als nicht-linearer optischer Filter ausgeführt sein und somit insbesondere Hochleistungsstrahlung filtern. Sind in der Objektszene 11 Störer bzw. Blender vorhanden, die die Detektoreinheit 8 beeinträchtigen oder beschädigen sollen, kann durch eine Schutzeinrichtung, die entsprechende Beschichtungen an den optischen Element der optischen Einrichtung 1 vorsieht, oder das beschriebene bewegbare optische Element 30, eine entsprechende Anpassung der Auskopplung oder Absorption vorgenommen werden.

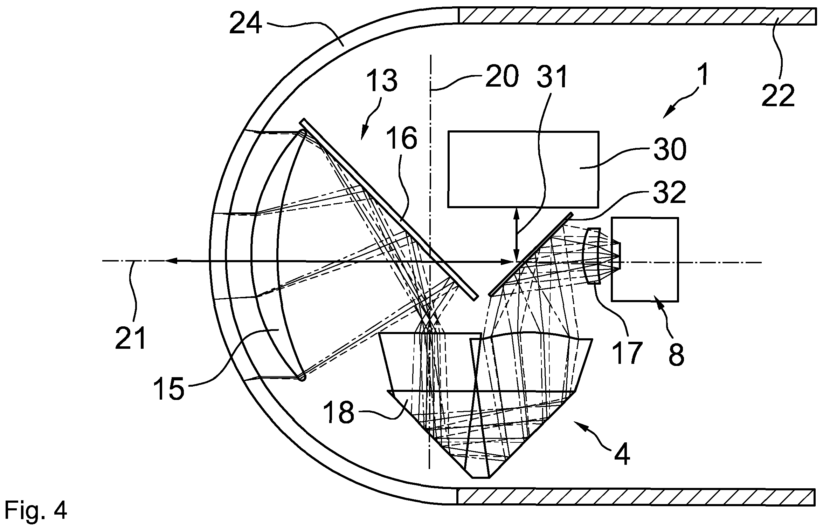

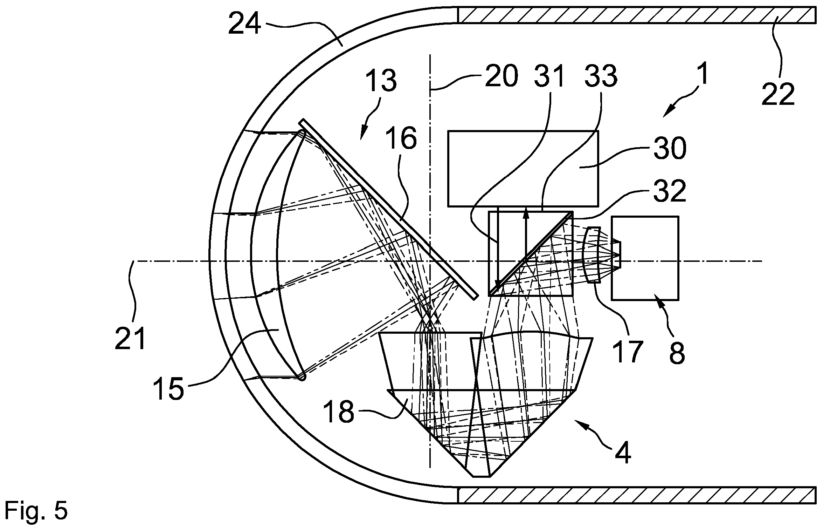

Fig. 4, 5 zeigen eine optische Vorrichtung 1 nach einer dritten bzw. vierten Ausführungsform. Grundsätzlich ist die vorhergehende Beschreibung auf die Ausführungen nach Fig. 4, 5 übertragbar. Beispielsweise kann die optische Vorrichtung 1 in Fig. 4, 5 ebenfalls eine Detektoroptik 17 und eine Detektoreinheit 8 aufweisen. Wie bereits beschrieben, verbessert ein refraktives Element im Strahlengang die Punktbildqualität im Zwischenbild. Die optische Vorrichtung 1 gemäß Fig. 4, 5 verzichtet auf fokussierende Spiegel und verwendet ein als Linse ausgebildetes refraktives Element 15 als primäre Optik. In diesem Fall verläuft die Nickachse 20 nach der ersten Faltung des Strahlengangs (anders als bei Verwendung einer Spiegeloptik nach Fig. 2, 3). Dadurch ergibt sich hinter der Nickachse 20 ein Bauraum, der von einer weiteren Einrichtung genutzt werden kann.

Mit anderen Worten kann in der Ausgestaltung nach Fig. 4, 5 auf den Primärspiegel 14 verzichtet werden, sodass stattdessen ein Bauraum im Bereich der Nickachse 20 bzw. hinter der Nickachse 20 ausgenutzt werden kann, der sonst von dem Primärspiegel 14 belegt wird. In den gezeigten Ausgestaltungen wird somit eine Fokussierung durch das refraktive Element 15, das als Linse ausgebildet ist, vorgenommen und eine Umlenkung mittels der Umlenkungsoptik 16, die als Umlenkspiegel ausgebildet ist, vorgenommen. Dadurch können weitere Bestandteile der bisherigen optischen Vorrichtung 1 verlagert werden. Insbesondere kann der Prismablock 18 weiter von der Rollachse 21, die mit der optischen Achse zusammenfällt, beabstandet werden.

Wie beschrieben, kann der gewonnene Bauraum für weitere Einrichtungen oder Elemente der optischen Vorrichtung 1 ausgenutzt werden. Beispielsweise kann der gewonnene Bauraum dazu verwendet werden, um einen Laser 30, umfassend lasernaher Elektronik und Laser-Empfänger zu montieren. Es gibt beispielsweise zwei Möglichkeiten, einen von dem Laser 30 emittierten Laserstrahl 31 in die Optik der optischen Vorrichtung 1 einzukoppeln. Die beiden Varianten sind in Fig. 4 bzw. 5 dargestellt.

In Fig. 4 ist dargestellt, dass eine Spiegelung des von dem Laser 30 emittierten Laserstrahls 31 an einem zweiten planen Umlenkspiegel 32 stattfinden kann. Der Laserstrahl 32 kann durch den ersten Umlenkspiegel, d.h. die Umlenkoptik 16, durchgeführt werden, beispielsweise über ein Loch in dem Umlenkspiegel bzw. der Umlenkoptik 16 oder eine entsprechende spektral selektive Beschichtung auf der Umlenkoptik 16. In diesem Fall haben der Abbildungsstrahlengang und der Laserstrahl 31 nur die primäre Linse, also das refraktive Element 15, als gemeinsames optisches Element.

Auf dem gleichen Pfad wie der Laserstrahl 31 kann Strahlung von dem Laserempfänger des Lasers 30 empfangen werden. Die in Fig. 4 gezeigte Ausgestaltung bietet sich beispielsweise für die Verwendung eines laserbasierten Entfernungsmessers bzw. für Anwendungen unter Verwendung eines einzelnen Laserstrahls 31 an. Liegt die Wellenlänge des Laserstrahls 31 nicht im selben Spektralbereich wie die Wellenlänge der Strahlung im Abbildungsstrahlengang, kann die in Fig. 4 gezeigte Variante vorteilhaft sein. Für Anwendungen, in denen ein großes Sichtfeld erforderlich ist, bietet sich die Ausgestaltung nach Fig. 5 an.

Fig. 5 zeigt eine Einkopplung des Laserstrahls 31 durch einen Strahlteiler 33, insbesondere einen Strahlteilungskubus. Alternativ wäre, wie bei der Ausgestaltung nach Fig. 4, eine Einkopplung des Laserstrahls 31 über ein Loch oder eine spektral selektive Beschichtung ebenfalls möglich. Insbesondere bietet sich die Ausgestaltung nach Fig. 5 für Anwendungen an, in denen der Laserstrahl 31 und die Strahlung im Abbildungsstrahlengang im gleichen Spektralbereich liegen, wobei eine geeignete Beschichtung ein Auskoppeln des Laserstrahls 31 bzw. eines rückreflektierten Signals an dem Strahlteiler 33 ermöglicht.

Der Laserstrahlengang kann nicht nur zur Transmission des Laserstrahls, sondern auch zum Empfangen von von einem Objekt zurückgestreuter Strahlung genutzt werden. Die Rückstreuung wird dann auf einen Laser-Empfänger gegeben, der Teil der Baugruppe des Lasers 30 ist. Beispielhafte Anwendungen der in Fig. 5 gezeigten Variante des optischen Systems bzw. der optischen Vorrichtung 1 sind gerichtete Gegenmaßnahmen (DIRCM), Entfernungsmessung, 3D-Imaging oder suchkopfgestützte Zündung. Die ganze Anordnung kann auch als Optik eines kompakten Electro-Optical Targeting and Reconnaissance Sensor (EOTRS) dienen.

Neben dem effizienten Ausnutzen des Bauraums der optischen Vorrichtung 1 verbessert das Anordnen einer optischen Einrichtung, beispielsweise des Lasers 30, die Wuchtung der optischen Vorrichtung 1.

Die in den einzelnen Ausführungsbeispielen gezeigten Vorteile, Einzelheiten und Merkmale sind beliebig untereinander austauschbar, miteinander kombinierbar und aufeinander übertragbar.

### Bezugszeichenliste

- 1: optische Vorrichtung
- 2: Suchkopf
- 3: Lenkflugkörpersystem
- 4: Schutzeinrichtung
- 5: Wirkteil
- 6: Raketentriebwerk
- 7: Lenkteil
- 8: Detektoreinheit
- 9: Lenkflügel
- 10: Sehfeld
- 11: Objektszene
- 12: Längsachse
- 13: Eintrittsoptik
- 14: Primärspiegel
- 15: refraktives Element
- 16: Umlenkoptik
- 17: Detektoroptik
- 18, 19: Prismenblock
- 20: Nickachse
- 21: Rollachse
- 22: Außengehäuse
- 23: Kühler
- 24: Dom
- 25, 26: Teil
- 27: Blendeneinrichtung
- 28: Kaltblende
- 29: optische Fläche
- 30: Laser
- 31: Laserstrahl

- 32: Umlenkspiegel
- 33: Strahlteiler
- 40: optisches Element

## Patentansprüche

1. Optische Vorrichtung (1) zur Erfassung einer Objektszene (11) mit einem abbildenden optischen System, umfassend eine zur Sammlung einfallender elektromagnetischer Strahlung ausgebildete Eintrittsoptik (13) und eine zur Umlenkung der elektromagnetischen Strahlung von der Eintrittsoptik (13) zu wenigstens einer Detektoreinheit (8) ausgebildete Umlenkoptik (16), wobei die Umlenkoptik (16) und/oder die Eintrittsoptik (13) um eine Längsachse (12) der optischen Vorrichtung (1) drehbar gelagert ist und die Eintrittsoptik (13) relativ zu der Umlenkoptik (16) um eine zur Längsachse (12) im Wesentlichen orthogonal ausgerichtete Nickachse (20) schwenkbar gelagert ist, **dadurch gekennzeichnet, dass**
a) die optische Vorrichtung (1) dazu ausgebildet ist, zwischen zwei optischen Elementen der Umlenkoptik (16) ein Zwischenbild zu erzeugen, welches Zwischenbild mittels einer Abbildungsoptik auf die wenigstens eine Detektoreinheit (8) abbildbar ist, wobei die Eintrittsoptik (13) dazu ausgebildet ist, den Strahlengang der Eintrittsoptik (13) mittels wenigstens eines refraktiven optischen Elements (15) zu fokussieren und/oder zu falten und
b) die optische Vorrichtung (1) eine optische Schutzreinrichtung (4) umfasst, die dazu ausgebildet ist,
- die optische Vorrichtung (1), insbesondere die Detektoreinheit (8), vor elektromagnetischer Strahlung, oberhalb eines definierten Strahlungsflusses, zu schützen,
- den Reflexionsgrad einer optischen Fläche (29) eines optischen Prismas der Umlenkoptik (16) einzustellen, wobei der Reflexionsgrad durch Einstellen eines Abstands eines bewegbaren optischen Elements (40) zu der optischen Fläche (29) einstellbar ist,
wobei die optische Schutzeinrichtung weiter dazu ausgebildet ist, den Abstand so einzustellen,
dass an der optischen Fläche (29) Totalreflexion der einfallenden elektromagnetischen Strahlung auftritt, wenn der Strahlungsfluss der einfallenden elektromagnetischen Strahlung unterhalb des definierten Strahlungsflusses ist; und
dass an der optischen Fläche (29) frustrierte Totalreflexion der einfallenden elektromagnetischen Strahlung auftritt, wenn der Strahlungsfluss der einfallenden elektromagnetischen Strahlung oberhalb des definierten Strahlungsflusses ist.

2. Optische Vorrichtung (1) nach Anspruch 1, wobei das refraktive optische Element (15) als Linse oder als Mangin-Spiegel ausgebildet ist oder einen solchen umfasst.

3. Optische Vorrichtung (1) nach Anspruch 1 oder 2, wobei die optische Schutzeinrichtung (4) dazu ausgebildet ist, die optische Vorrichtung (1) vor Inband-Strahlung, insbesondere Hochleistungsstrahlung, zu schützen, wobei die optische Vorrichtung (1) wenigstens eine erste optische Schutzeinheit aufweist, die dazu ausgebildet ist, elektromagnetische Strahlung oberhalb eines definierten Grenzstrahlungsflusses, insbesondere oberhalb einer definierten Bestrahlungsstärke, zu filtern.

4. Optische Vorrichtung (1) nach einem der vorangehenden Ansprüche, wobei die Schutzeinrichtung (4) dazu ausgebildet ist, die optische Vorrichtung (1) vor Out-of-Band-Strahlung zu schützen, wobei die Schutzeinrichtung (4) eine zweite optische Schutzeinheit aufweist, die dazu ausgebildet ist, elektromagnetische Strahlung materialbedingt zu absorbieren, insbesondere Strahlung unterhalb einer Wellenlänge von 1,1µm, und/oder die zweite optische Schutzeinheit wenigstens eine Mikrostruktur auf wenigstens einem optischen Element der optischen Vorrichtung, insbesondere einem optischen Prisma der optischen Umlenkeinrichtung, aufweist.

5. Optische Vorrichtung (1) nach einem vorangehenden Ansprüche, wobei die Schutzeinrichtung (4) dazu ausgebildet ist, den Reflexionsgrad in Abhängigkeit von einem gesteuerten Triggersignal, insbesondere einem Zeitsignal, oder einem gesteuerten Triggersignal, insbesondere einem Detektionssignal der Detektoreinheit (8), oder in Abhängigkeit von der Temperatur wenigstens eines Elements, insbesondere das die optische Fläche (29) aufweisenden optischen Elements, einzustellen.

6. Optische Vorrichtung (1) nach einem der Ansprüche 3 bis 5, wobei, die Schutzeinrichtung (4) dazu ausgebildet ist, den Reflexionsgrad materialbedingt, insbesondere durch temperaturbedingte Veränderung eines Abstands zwischen der optischen Fläche (29) und einem weiteren optischen Element (40), einzustellen.

7. Optische Vorrichtung (1) nach einem der vorangehenden Ansprüche, mit wenigstens einer steuerbaren Einrichtung, insbesondere einer Blendeneinrichtung (27), insbesondere einer Irisblende und/oder einem thermochromen Element, die dazu ausgebildet ist, einen Strahlungsfluss auf die Detektoreinheit (8), insbesondereim Bereich einer Austrittspupille, zu begrenzen.

8. Suchkopf (2), insbesondere für ein Lenkflugkörpersystem (3), umfassend wenigstens eine optische Vorrichtung (1) nach einem der vorangehenden Ansprüche.

## Claims

1. Optical apparatus (1) for capturing an object scene (11) with an imaging optical system, comprising an entrance optics unit (13) designed for collecting incident electromagnetic radiation and a deflection optics unit (16) designed for deflecting the electromagnetic radiation from the entrance optics unit (13) to at least one detector unit (8), wherein the deflection optics unit (16) and/or the entrance optics unit (13) are/is mounted rotatably about a longitudinal axis (12) of the optical apparatus (1) and the entrance optics unit (13) is mounted pivotably relative to the deflection optics unit (16) about a pitch axis (20) oriented substantially orthogonally to the longitudinal axis (12), **characterized in that**
a) the optical apparatus (1) is designed to generate an intermediate image between two optical elements of the deflection optics unit (16), which intermediate image can be imaged onto the at least one detector unit (8) by means of an imaging optics unit, wherein the entrance optics unit (13) is designed to focus and/or fold the beam path of the entrance optics unit (13) by means of at least one refractive optical element (15), and
b) the optical apparatus (1) comprises an optical protective device (4) designed to:
- protect the optical apparatus (1), in particular the detector unit (8), against electromagnetic radiation, above a defined radiation flux,
- adjust the reflectance of an optical surface (29) of an optical prism of the deflection optics unit (16), wherein the reflectance is adjustable by adjusting a distance between a movable optical element (40) and the optical surface (29),
wherein the optical protective device is further designed to adjust the distance such that total internal reflection of the incident electromagnetic radiation occurs at the optical surface (29) if the radiation flux of the incident electromagnetic radiation is below the defined radiation flux; and
that at the optical surface (29), frustrated total internal reflection of the incident electromagnetic radiation occurs if the radiation flux of the incident electromagnetic radiation is above the defined radiation flux.

2. Optical apparatus (1) according to Claim 1, wherein the refractive optical element (15) is designed as or comprises a lens or a Mangin mirror.

3. Optical apparatus (1) according to Claim 1 or 2, wherein the optical protective device (4) is designed to protect the optical apparatus (1) against in-band radiation, in particular high-power radiation, wherein the optical apparatus (1) has at least one first optical protective unit designed to filter electromagnetic radiation above a defined limit radiation flux, in particular above a defined irradiance.

4. Optical apparatus (1) according to any of the preceding claims, wherein the protective device (4) is designed to protect the optical apparatus (1) against out-of-band radiation, wherein the protective device (4) has a second optical protective unit designed to absorb electromagnetic radiation in a material-governed manner, in particular radiation below a wavelength of 1.1 µm, and/or the second optical protective unit has at least one microstructure on at least one optical element of the optical apparatus, in particular an optical prism of the optical deflection device.

5. Optical apparatus (1) according to any of the preceding claims, wherein the protective device (4) is designed to adjust the reflectance depending on a controlled trigger signal, in particular a time signal, or a controlled trigger signal, in particular a detection signal of the detector unit (8), or depending on the temperature of at least one element, in particular of the optical element having the optical surface (29).

6. Optical apparatus (1) according to any of Claims 3 to 5, wherein the protective device (4) is designed to adjust the reflectance in a material-governed manner, in particular by temperature-governed change of a distance between the optical surface (29) and a further optical element (40).

7. Optical apparatus (1) according to any of the preceding claims, comprising at least one controllable device, in particular a diaphragm device (27), in particular an iris diaphragm, and/or a thermochromic element, which is designed to limit a radiation flux to the detector unit (8), in particular in the region of an exit pupil.

8. Homing head (2), in particular for a guided missile system (3), comprising at least one optical apparatus (1) according to any of the preceding claims.

## Revendications

1. Arrangement optique (1) destiné à capturer une scène d'objet (11) avec un système optique d'imagerie, comprenant une unité optique d'entrée (13) configurée pour collecter un rayonnement électromagnétique incident et une optique de déviation (16) configurée pour dévier le rayonnement électromagnétique de l'unité optique d'entrée (13) vers au moins une unité de détection (8), l'optique de déviation (16) et/ou l'optique d'entrée (13) étant montées rotatives autour d'un axe longitudinal (12) de l'arrangement optique (1) et l'optique d'entrée (13) étant montée pivotante par rapport à l'optique de déviation (16) autour d'un axe de tangage (20) orienté sensiblement orthogonalement à l'axe longitudinal (12), **caractérisé en ce que**
a) l'arrangement optique (1) est configuré pour générer une image intermédiaire entre deux éléments optiques de l'optique de déviation (16), ladite image intermédiaire pouvant être reproduite sur au moins une unité de détection (8) au moyen d'une optique de reproduction, l'unité optique d'entrée (13) étant configurée pour focaliser et/ou plier le trajet du faisceau de l'optique d'entrée (13) au moyen d'au moins un élément optique de réfraction (15) et
b) l'arrangement optique (1) comprend un dispositif de protection optique (4), qui est configuré pour
- protéger l'arrangement optique (1), en particulier l'unité de détection (8), contre les rayonnements électromagnétiques au-dessus d'un flux de rayonnement défini,
- régler la réflectance d'une surface optique (29) d'un prisme optique de l'optique de déviation (16), la réflectance pouvant être réglée par réglage d'une distance entre un élément optique mobile (40) et la surface optique (29),
le dispositif de protection optique étant en outre configuré pour régler la distance de sorte que la réflexion totale du rayonnement électromagnétique incident se produise au niveau de la surface optique (29) lorsque le flux de rayonnement du rayonnement électromagnétique incident est inférieur au flux de rayonnement défini ; et
**en ce qu'**une réflexion totale frustrée du rayonnement électromagnétique incident se produit au niveau de la surface optique (29) lorsque le flux de rayonnement du rayonnement électromagnétique incident est supérieur au flux de rayonnement défini.

2. Arrangement optique (1) selon la revendication 1, l'élément optique de réfraction (15) étant réalisé sous la forme d'une lentille ou d'un miroir de Mangin ou comprend un tel élément.

3. Arrangement optique (1) selon la revendication 1 ou 2, le dispositif de protection optique (4) étant configuré pour protéger l'arrangement optique (1) contre un rayonnement intrabande, en particulier un rayonnement de haute puissance, l'arrangement optique (1) possédant au moins une première unité de protection optique qui est configurée pour filtrer le rayonnement électromagnétique au-dessus d'un flux de rayonnement limite défini, en particulier au-dessus d'une irradiance définie.

4. Arrangement optique (1) selon l'une des revendications précédentes, le dispositif de protection (4) étant configuré pour protéger l'arrangement optique (1) contre un rayonnement hors bande, le dispositif de protection (4) possédant une deuxième unité de protection optique qui est configurée pour absorber un rayonnement électromagnétique lié au matériau, en particulier un rayonnement inférieur à une longueur d'onde de 1,1 µm, et/ou la deuxième unité de protection optique présentant au moins une microstructure sur au moins un élément optique de l'arrangement optique, en particulier un prisme optique du dispositif de déviation optique.

5. Arrangement optique (1) selon l'une des revendications précédentes, le dispositif de protection (4) étant configuré pour déterminer la réflectance en fonction d'un signal de déclenchement commandé, en particulier d'un signal de temps, ou d'un signal de déclenchement commandé, en particulier d'un signal de détection de l'unité de détection (8), ou en fonction de la température d'au moins un élément, en particulier l'élément optique qui présente la surface optique (29).

6. Arrangement optique (1) selon l'une des revendications 3 à 5, le dispositif de protection (4) étant configuré pour régler la réflectance en fonction du matériau, en particulier par une modification en fonction de la température d'une distance entre la surface optique (29) et un élément optique (40) supplémentaire.

7. Arrangement optique (1) selon l'une des revendications précédentes, comprenant au moins un dispositif commandable, en particulier un dispositif de diaphragme (27), en particulier un diaphragme à iris et/ou un élément thermochrome, qui est configuré pour limiter un flux de rayonnement sur l'unité de détection (8), en particulier dans la zone d'une pupille de sortie.

8. Tête chercheuse (2), en particulier pour un système de missile guidé (3), comprenant au moins un arrangement optique (1) selon l'une des revendications précédentes.
